## Europäisches Patentamt
## European Patent Office
## Office européen des brevets

(19)

(11) Publication number:
**0 080 898**
**B1**

(12) **EUROPEAN PATENT SPECIFICATION**

(45) Date of publication of patent specification: **19.02.86**

(51) Int. Cl.⁴: **G 02 F 1/137**

(21) Application number: **82306370.6**

(22) Date of filing: **30.11.82**

(54) **Liquid crystal display devices.**

(30) Priority: **01.12.81 GB 8136166**

(43) Date of publication of application:
**08.06.83 Bulletin 83/23**

(45) Publication of the grant of the patent:
**19.02.86 Bulletin 86/08**

(84) Designated Contracting States:
**CH DE FR IT LI**

(56) References cited:
**FR-A-2 260 155**
**GB-A-1 569 516**
**GB-A-2 062 930**
**US-A-4 097 130**

**PATENTS ABSTRACTS OF JAPAN, vol. 3, no. 5,**
**18th January 1979, page 158 E84;**

(73) Proprietor: **STANDARD TELEPHONES AND CABLES PUBLIC LIMITED COMPANY**
**190 Strand**
**London, WC2R 1DU (GB)**

(72) Inventor: **McCartney, John Howard**
**53 Beckett's Park Drive**
**Leeds LS6 3PJ Yorkshire (GB)**
Inventor: **Moutran, Rafik**
**5 Broadlea Crescent**
**Leeds, LS13 2JS Yorkshire (GB)**

(74) Representative: **Laurence, Simon French et al**
**STC Patent Department Edinburgh Way**
**Harlow Essex CM20 2SH (GB)**

Courier Press, Leamington Spa, England.

# Description

This invention relates to liquid crystal display devices, and in particular to a device that appears black in transmission when unenergised and, when energised, is capable of revealing one of two possible alternative legends in black displayed against contrasting backgrounds of different colour. Alternatively an inverse format of electrode pattern can be used to provide the two legends in the two different colours each set against a black background. This device incorporates a pair of twisted nematic liquid crystal display cells.

The conventional twisted nematic liquid crystal display cell has a thin layer of positive dielectric anisotropy nematic liquid crystal material enclosed by two glass plates and a perimeter seal. Transparent conductors, typically of indium tin oxide, are defined on the inward facing surfaces of the two glass plates to give areas of overlap corresponding to the legend to be displayed. The electrodes on these inward facing surfaces may be covered with a thin insulating layer to prevent the passage of direct current through the cell as such current flow can produce electrolytic degradation of the liquid crystal material. The surfaces are then treated to produce, in the absence of any applied field, a particular alignment of the molecules of the liquid crystal adjacent these surfaces. In the case of the twisted nematic cell, the required alignment for each surface is parallel homogeneous alignment, that is the molecules should all lie in a common direction that can be resolved into two components, respectively normal to the plane of the surface and in the plane of the surface. For parallel homogeneous alignment the normal component may be zero (zero tilt), but there must be a substantial planar component. Two two plates are then assembled so that the planar component of the molecular alignment direction of one plate is perpendicular to that of the other thereby giving a 90° twist. The conventional way of achieving the requisite alignment properties is by rubbing or by oblique evaporation. The perimeter seal, by which the two plates are secured together to form a hermetic enclosure for the liquid crystal layer, is typically of plastics material or glass. When glass is used, it is normally applied by screen printing in the form of a frit which is subsequently fused. Normally the cell is filled via an aperture formed by a break in the perimeter seal. In the case of a fused frit perimeter seal this aperture is conveniently sealed off by means of a suitable solder after the cell has been filled.

The cell is operated between a pair of linear polarisers whose polarisation planes are either parallel or crossed, and the cell is oriented so that at each major surface of the liquid crystal layer the planar component of the molecular alignment direction lies in, or normal to, the polarisation planes.

In the unenergised state the cell effectively rotates the plane of polarisation through 90°, and so the assembly appears transparent if the polarisation planes are crossed, or black if they are parallel. When the cell is then energised by the application of a suitable electric field across the thickness of the layer, the molecular alignment is converted to homeotropic in the regions of the field. Homeotropic alignment produces no rotation of the plane of polarisation, and hence the appearance of these regions is reversed.

In the construction of a twisted nematic cell some consideration needs to be taken to avoid problems of reverse twist and reverse tilt effects. These are phenomena resulting from a lack of bias. In the case of reverse twist the problem is that the display field divides into regions where the twist is left-handed separated by other regions where it is right-handed. In the case of reverse tilt the problem is that when the cell relaxes back from an electric field induced homeotropic alignment state there is insufficient bias to prevent some molecules from rotating one way towards homogeneous alignment while others rotate the opposite way. These problems are well known, as also are ways of overcoming them. These ways include use of a chiral additive to the nematic mixture so as to produce a cholesteric pitch at least four times longer than the liquid crystal layer thickness; additionally or alternatively the use of molecular alignment techniques providing a significant tilt angle at the major surfaces of the liquid crystal; and additionally or alternatively the use of a twist angle, the angle between the planar components of the molecular alignment directions, that is not quite 90°, being typically in the range 88° to 89°. In the light of these known techniques for dealing with the problems of reverse tilt and reverse twist it is to be understood that in this specification when reference is made to a 90° twisted nematic cell this is to be understood as extending to cells which for the purposes of avoiding these phenomena incorporate a chiral additive and alternatively or additionally incorporate a twist angle that is not exactly 90°.

In Patent Abstracts of Japan Vol. 3. No. 5 (1979) page 158 E84 (Kokai No. 53—132999) there is disclosed one form of liquid crystal display device that is capable of revealing one of two possible alternative legends in black against contrasting backgrounds of different colour, or alternatively the inverse format in which the legends in alternative colours, but set against a black background. This device employs two of such 90° twisted nematic cells arranged in tandem between crossed neutral linear polarisers.

The two liquid crystal layers of the Japanese display device contain guest dyes of contrasting colour, and the relative orientation of the various components of the device is such that, if a region of either cell is excited into homeotropic alignment so that light transmitted through such a region does not have its plane of polarisation rotated through 90°, then the guest dye molecules in the other cell will be in the orientation in which they are absorbing and thus show their colour.

**0 080 898**

The plane of polarisation of such light will have suffered only one rotation by 90° in its passage through the two cells, and thus it is able to pass through the second neutral polariser substantially unattenuated. For unenergised regions the rotation is 90° ± 90°, and in this instance the second polariser has the orientation which blocks transmission. Thus energisation of a selected region of either cell reveals, against a black background, that region in the colour of the dye of the other cell.

A similar structure is also described in US—A—4097130, with the difference that one of the conventional linear polarisers of the Japanese device is here replaced by a coloured linear polariser. The term 'coloured linear polariser' is used to mean a device that, throughout the whole range of the visible spectrum, is substantially transparent to light of one plane of polarisation, but absorbs light of the orthogonal polarisation plane over a restricted range of the visible spectrum only, so that coloured light of this polarisation plane is transmitted. Coloured linear polarisers of contrasting colour are marketed for instance by Sanritsu Electric Co. of Tokyo. In order to distinguish these coloured linear polarisers from the more conventional linear polarisers that absorb light over the whole range of the visible spectrum, these latter are hereinafter referred to as 'neutral' linear polarisers.

The effect of replacing one of the neutral linear polarisers of the Japanese device with a coloured linear polariser as described in the United States patent specification is to distinguish the appearance of a region that is simultaneously energised in both cells from the appearance of that region when neither cell is energised.

One of the drawbacks of both these devices results from their reliance upon the use of guest-host cells incorporating dichroic dyes. This drawback is particularly significant when it is desired to construct a device in an array form where different locations in the array involve the use of different pairs of contrasting colours. If the colour is provided by dyes dispersed in a liquid crystal medium, then these different locations will need to be constituted by different cells in order to keep the different dyes separated from each other. In the present invention the cells incorporate no dyes in their liquid crystal mixtures, and hence a single cell can be employed for the display of different colours over different regions of its display area.

According to the present invention there is provided a liquid crystal display device having between crossed neutral linear polarisers a tandem arrangement of first and second 90° twisted nematic internally electroded cells in each of which the electrodes overlap in part, wherein the two cells are oriented such that at each major surface of the two liquid crystal layers the planar component of the molecular alignment direction is normal to the polarisation plane of one or other of the neutral polarisers, which device is characterised in that both cells are devoid of dichroic dye and in that between the cells is located a tandem arrangement of crossed coloured linear polarisers of contrasting colour oriented with their polarisation planes aligned with those of the neutral polarisers.

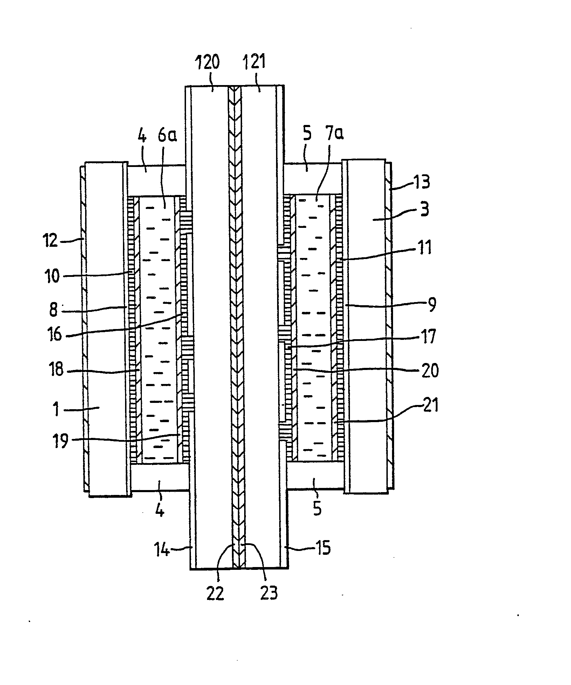

There follows a description of a liquid crystal display device embodying the invention in a preferred form. The description refers to the accompanying drawing which depicts a schematic cross section through the liquid crystal display device.

A pair of 90° twisted nematic display cells is formed by four glass sheets 1, 120, 121 and 3 and two perimeter seals 4 and 5. The two cells contain layers 6a and 7a of a nematic liquid crystal material. The inward facing surfaces of sheets 1 and 3 are provided respectively with transparent indium tin oxide counter-electrode layers 8 and 9 covering the whole area of the liquid crystal layers, and themselves are covered with barrier layers 10 and 11 of silica. The outward facing surfaces of sheets 1 and 3, are covered respectively with layers 12 and 13 of neutral linear polariser arranged in crossed configuration.

The surfaces of sheets 120 and 121 that face their respective liquid crystal layers 6a and 7a are similarly provided with transparent indium tin oxide electrode layers 14 and 15, but in this instance portions are omitted from each layer in the form of one of the legends that the display device is required to display in black against a coloured background. (If desired the arrangement of electrode and counter-electrode can be interchanged for either or both of the cells.) The counter-electrodes also are insulated from the liquid crystal layers by means of silica barrier layers 16 and 17. All four barrier layers 10, 11, 16 and 17 are covered with molecular alignment layers 18, 19, 20 and 21 each providing, in the absence of an applied electric field, parallel homogeneous alignment of the liquid crystal molecules at the adjacent surface of the respective liquid crystal layer 6 or 7. In the case of cells whose perimeter seals are made of fused glass frit these alignment layers may conveniently be provided by the oblique evaporation of silica, using a 5° evaporation to give one alignment layer producing significant tilt, and a 30° evaporation for the opposing alignment layer to produce substantially no tilt. The alignment layers are oriented so that the planar components of the molecular alignment directions of layers 18, 19, 20 are each substantially normal to the polarisation plane of one or other of the polarisers 12, 13. This provides each cell with its requisite twist, and orients the cell with respect to the polarisers so that it will in its unenergised state rotate the plane of polarisation of light entering the cell through those polarisers.

Sandwiched between the two sheets 120 and 121 is a tandem arrangement of two coloured linear polarisers 22 and 23 of contrasting colour. These are oriented in crossed configuration, with the plane of polarisation of one of these coloured polarisers parallel with that on one of the neutral polarisers 12, 13.

In the ensuing analysis of the operation of the device it will be assumed for the sake of example that the polarisation plane of the neutral polariser 12 is at right angles to the plane of the page of the Figure, and parallel with the polarisation plane of the coloured polariser 22.

Considering first the situation when no potential is applied across either cell, the plane polarised light passing through polariser 12 has its plane of polarisation rotated through 90° as it passes through the first cell (liquid crystal layer 6) by virtue of the fact that the molecules are homogeneously aligned with a 90° twist. Any light that is transmitted through the first cell, and is also able to penetrate the crossed coloured polarisers to enter the second, enters liquid crystal layer 7a plane polarised in the plane of the page. The plane of polarisation is rotated through 90° on passage through the thickness of the first liquid crystal layer, and again by 90° on passage through the thickness of this layer. The emergent light is therefore plane polarised at right angles to the plane of the page, and thus is not transmitted by polariser 13. Thus in the unenergised state the device appears entirely black in transmission.

When the first cell is energised by the application of a suitable alternating potential between electrodes 8 and 14, while the second cell remains unenergised, the regions of layer 6a between the electrodes are converted from homogeneous alignment to homeotropic alignment. In these regions the plane of polarisation of the light is not rotated on passage through the layer. Therefore this light is incident upon the crossed coloured polarisers with its polarisation plane at right angles to the plane of the page. Coloured polariser 22 is also oriented with its polarisation plane at right angles to the plane of the page, and hence this light is able to penetrate it substantially unattenuated. Coloured polariser 23 is oriented with its polarisation plane in the plane of the page, and hence is absorbing and only allows coloured light to be transmitted. This coloured light then has its plane of polarisation rotated through 90° in its passage through liquid crystal layer 7a, and hence is incident upon neutral polariser 13 with its polarisation plane in the plane of the page. Neutral polariser 13 is also oriented with its polarisation plane in the plane of the page, and hence the coloured light is able to penetrate this polariser substantially unattenuated. Thus the energised region of layer 6a is revealed in the colour of coloured polariser 23, while the unenergised regions remain black.

When the second cell is energised by the application of a suitable alternating potential between electrodes 9 and 15, while the first cell remains unenergised, the regions of layer 7a between the electrodes are converted from homogeneous alignment to homeotropic alignment. Since the first cell is in this instance unenergised, the plane polarised light transmitted by the neutral polariser 12 has its polarisation plane rotated by 90° in its passage through the first cell, and hence the light incident upon the tandem arrangement of crossed coloured polarisers is plane polarised with its polarisation plane in the plane of the page. Coloured polariser 22 is oriented with its polarisation plane at right angles to the plane of the page, and thus only allows coloured light to be transmitted. This coloured light is able to penetrate coloured polariser 23 substantially unattenuated since the light's polarisation plane is aligned parallel with the polarisation plane of this polariser. In the energised regions of the second cell this coloured light suffers no further rotation of its polarisation plane on passage through the thickness of that cell, and hence is incident upon neutral polariser 13 with its polarisation plane still lying in the plane of the page. This is the polarisation plane of neutral polariser 13. This coloured light is therefore able to penetrate neutral polariser 13 substantially unattenuated. On the other hand, in the unenergised regions of the second cell the coloured light is subjected to a 90° rotation of its polarisation plane in its passage through that second cell. In these regions therefore, the coloured light is incident upon neutral polariser 13 with the polarisation plane of that light at right angles to the plane of the page. This light is therefore blocked by neutral polariser 13 which has its polarisation plane in the plane of the page. Thus in this instance the energised region of layer 7a is revealed in the colour of coloured polariser 22, while the unenergised regions remain black.

## Claim

A liquid crystal display device having between crossed neutral linear polarisers a tandem arrangement of first and second 90° twisted nematic internally electroded cells in each of which the electrodes overlap in part, wherein the two cells are oriented such that at each major surface of the two liquid crystal layers the planar component of the molecular alignment direction is normal to the polarisation plane of one or other of the neutral polarisers, which device is characterised in that both cells are devoid of dichroic dye and in that between the cells is located a tandem arrangement of crossed coloured linear polarisers of contrasting colour oriented with their polarisation planes aligned with those of the neutral polarisers.

## Revendication

Dispositif d'affichage à cristaux liquides comportant, entre des polariseurs linéaires croisés neutres, un agencement en tandem de première et seconde cellules à électrodes internes nématiques à torsion de 90°, dans chacune desquelles les électrodes se recouvrent en partie, les deux cellules étant orientées de manière qu'à chaque surface majeure des deux couches de cristaux liquides la composante plane de la direction d'alignement moléculaire soit perpendiculaire au plan de polarisation de l'un ou de l'autre des polariseurs neutres, dispositif caractérisé en ce que les deux cellules sont dépourvues d'un colorant dichroïque et en ce qu'il y a entre les cellules un agencement en tandem de polariseurs linéaires colorés croisés, de couleur contrastante, orientés de manière que leurs plans de polarisation soient alignés avec ceux des polariseurs neutres.

**Patentanspruch**

Flüssigkristall-Anzeigevorrichtung, die zwischen gekreuzten, neutralen, linearen Polarisatoren eine Tandem-Anordnung von ersten und zweiten um 90° verdrehten, nematischen, mit inneren Elektroden versehenen Zellen aufweist, in denen jeweils die Elektroden teilweise einander überlappen, wobei die beiden Zellen so orientiert sind, daß an jeder Hauptfläche der beiden Flüssigkristallschichten die Planarkomponente der molekularen Ausricht-Richtung senkrecht zur Polarisationsebene des einen oder anderen der neutralen Polarisatoren verläuft, dadurch gekennzeichnet, daß beide Zellen frei von dichroitischer Färbung sind und daß zwischen den Zellen eine Tandem-Anordnung von gekreuzten, farbigen, linearen Polarisatoren von in Kontrast stehender Farbe angeordnet ist, die mit ihren Polarisationsebenen in Flucht mit denen der neutralen Polarisatoren ausgerichtet sind.